(19)

**Europäisches Patentamt**
**European Patent Office**
**Office européen des brevets**

(11) **EP 4 640 914 A1**

(12) **EUROPEAN PATENT APPLICATION**
published in accordance with Art. 153(4) EPC

(43) Date of publication:
**29.10.2025 Bulletin 2025/44**

(21) Application number: **23907644.1**

(22) Date of filing: **18.12.2023**

(51) International Patent Classification (IPC):
*C23C 2/12* (2006.01)     *C23C 2/26* (2006.01)
*C23C 2/28* (2006.01)     *C23C 2/02* (2006.01)
*C22C 38/04* (2006.01)    *C22C 38/02* (2006.01)
*C22C 38/00* (2006.01)    *C22C 38/32* (2006.01)
*C22C 38/28* (2006.01)

(52) Cooperative Patent Classification (CPC):
**C22C 38/00; C22C 38/02; C22C 38/04;**
**C22C 38/28; C22C 38/32; C23C 2/02; C23C 2/12;**
**C23C 2/26; C23C 2/28**

(86) International application number:
**PCT/KR2023/020845**

(87) International publication number:
**WO 2024/136359 (27.06.2024 Gazette 2024/26)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **21.12.2022  KR 20220181087**

(71) Applicant: **POSCO Co., Ltd**
**Pohang-si, Gyeongsangbuk-do 37859 (KR)**

(72) Inventors:
• **LEE, Kang-Min**
**Gwangyang-si, Jeollanam-do 57807 (KR)**

• **HWANG, Hyeon-Seok**
**Gwangyang-si, Jeollanam-do 57807 (KR)**
• **OH, Kkoch-Nim**
**Gwangyang-si, Jeollanam-do 57807 (KR)**
• **OH, Ji-Eun**
**Gwangyang-si, Jeollanam-do 57807 (KR)**
• **CHO, Yong-Kyun**
**Seoul 06194 (KR)**

(74) Representative: **Meissner Bolte Partnerschaft**
**mbB**
**Patentanwälte Rechtsanwälte**
**Postfach 86 06 24**
**81633 München (DE)**

(54) **MEMBER AND METHOD FOR MANUFACTURING SAME**

(57)    The present invention relates to a member and a method for manufacturing same, and more specifically, to a hot press molded member having excellent chemical treatment properties and a method for manufacturing same.

[FIG. 1]

## Description

Technical Field

The present disclosure relates to a member and a method for manufacturing the same, and more specifically, to a hot press-formed member having excellent conversion treatment properties and a method for manufacturing the same.

Background Art

In recent years, automobile manufacturers have continuously been researching vehicle weight reductions to improve fuel efficiency and meet $CO_2$ emission regulations. Accordingly, various alloying elements are included to improve the strength of a steel material at the same weight, but problems such as increased hardenability and poor workability, with issues such as springback, are occurring.

To solve these problems, a hot press forming method has been proposed. The hot press forming method is a technology in which a steel material having a certain degree of strength is processed in an austenite single-phase region and then rapidly cooled to a low temperature to form a low-temperature structure such as martensite, or the like, in the steel material, thereby dramatically improving the strength of a product. Thereby, when a member having a high strength is formed, the problem of workability may be minimized.

Meanwhile, aluminum plating is widely used to improve corrosion resistance of the steel material applied to the hot press forming method. However, in terms of conversion treatment properties, since a main component of a plating bath is aluminum, it is difficult to grow phosphate crystals, and various methods are being attempted to improve this issue.

Summary of Invention

Technical Problem

An aspect of the present disclosure is to provide a member and a method for manufacturing the same.

An aspect of the present disclosure is to provide a hot press-formed member having excellent conversion treatment properties and a method for manufacturing the same.

An object of the present disclosure is not limited to the above description. The object of the present disclosure will be understood from the entire content of the present specification, and a person skilled in the art to which the present disclosure pertains will understand an additional object of the present disclosure without difficulty.

Solution to Problem

According to an aspect of the present disclosure, a member may be provided, the member including a base steel sheet; and

a plating layer formed on the base steel sheet,
wherein the plating layer includes a first alloy layer, a second alloy layer, a third alloy layer, and a fourth alloy layer, sequentially formed from the base steel sheet,
wherein the fourth alloy layer has an R value of 1200 to 4500 as defined in the following Relational Expression 1.

$$R = [Rpc] * [Zn]$$

in Relational Expression 1 above, [Rpc] is surface roughness indicating the number of peaks per 10 mm, and [Zn] is a weight % of an element.

The base steel sheet may include, by weight%, 0.02 to 0.6% of C, 0.001 to 2% of Si, 0.001 to 1% of Al, 0.1 to 4% of Mn, 0.05% or less of P, 0.02% or less of S, 0.02% or less of N, 0.0001 to 0.01% of B, with a remainder of Fe and inevitable impurities.

The base steel sheet may further include, by weight%, at least one selected from the group consisting of 0.1% or less of Ti, 1.00% or less of Cu, 1.00% or less of Mo, 1.00% or less of Cr, 1.00% or less of Ni, 1.00% or less of V, 0.01% or less of Ca, 0.1% or less of Nb, 1% or less of Sn, 1% or less of W, 1% or less of Sb, 0.1% or less of Mg, 1% or less of Co, 1% or less of As, 1% or less of Zr, 1% or less of Bi, and 0.3% or less of REM.

A Zn content of the fourth alloy layer may be in the range of 12.0 to 40.0%, by weight%.

An Rpc of the fourth alloy layer may be in the range of 80.0 to 130.0.

The first alloy layer may include, by weight%, 5.0 to 18.0% of Al, 1.0 to 10.0% of Si, 75.0 to 90.0% of Fe, and 2.0% or less of Zn,

the second alloy layer may include, by weight%, 25.0 to 48.0% of Al, 1.0 to 7.0% of Si, 36.0 to 53.0% of Fe, and 6.0 to 20.0% of Zn,
the third alloy layer may include, by weight%, 18.0 to 43.0% of Al, 8.0 to 15.0% of Si, 47.0 to 68.0% of Fe, and 2.0% or less of Zn, and
the fourth alloy layer may include, by weight%, 6.0% or less of 0, 36.0 to 73.0% of Al, 10.0% or less of Si, 42.0% or less of Fe, and 12.0 to 40.0% of Zn.

The member may have a coverage rate of 50% or more after conversion treatment.

According to another aspect of the present disclosure, a method for manufacturing a member may be provided, the method for manufacturing a member including: preparing a base steel sheet;

plating by immersing the base steel sheet in a plating bath including, by weight %, 26.0 to 30.0% of Zn, 6.0 to 9.0% of Si, with a remainder of Al and inevitable impurities;
skin pass milling the plated steel sheet;
heating the skin pass milled steel sheet to a temperature within a range of Ac3 to 950°C and maintaining the same for 1 to 1000 seconds; and
hot press forming the heated and maintained steel sheet.

Before the plating operation, an annealing operation in which the base steel sheet is heated to a temperature within a range of 600 to 950°C, in a gas atmosphere including 70% or more of $H_2$ and a remainder of $N_2$ at a dew point temperature of 5 to 20°C, and maintained for 100 to 500 seconds, may be further included.

A temperature of the plating bath may be in the range of 580 to 680°C.

The skin pass milling operation may be performed with a rolling force of 200 to 900 tons.

Advantageous Effects of Invention

As set forth above, according to an embodiment of the present disclosure, a member and a method for manufacturing the same may be provided.

According to an embodiment of the present disclosure, a hot press-formed member having excellent conversion treatment properties and a method for manufacturing the same may be provided.

Brief description of the Drawings

FIG. 1 is a schematic cross-sectional view of a plating layer of a member according to an embodiment of the present disclosure.
FIG. 2 is a photograph of Inventive Example 1 according to an embodiment of the present disclosure, measured using a glow discharge optical emission spectrometer (GDS) analysis method.

Best Mode for Invention

Hereinafter, preferred embodiments of the present disclosure will be described. Embodiments of the present disclosure may be modified in various forms, and the scope of the present disclosure should not be construed as being limited to the embodiments described below. The present embodiments are provided to those skilled in the art to further elaborate on the present disclosure.

Hereinafter, the present disclosure will be described in detail.

According to an embodiment of the present disclosure, a member may include a base steel sheet; and a plating layer formed on the base steel sheet.

Base steel sheet

A base steel sheet according to an embodiment of the present disclosure is not particularly limited in terms of an alloy composition thereof. However, according to an embodiment of the present disclosure, the base steel sheet may include, by weight %, 0.02 to 0.6% of C, 0.001 to 2% of Si, 0.001 to 1% of Al, 0.1 to 4% of Mn, 0.05% or less of P, 0.02% or less of S, 0.02% or less of N, 0.0001 to 0.01% of B, with a remainder of Fe and impurities.

The base steel sheet of the present disclosure may include a remainder of iron (Fe) and unavoidable impurities in addition to the above-described composition. Since unavoidable impurities may be unintentionally incorporated in a common manufacturing process, the component may not be excluded. Since these impurities are known to any person skilled in the common manufacturing process, the entire contents thereof are not particularly mentioned in the present specification.

In addition, according to an embodiment of the present disclosure, the base steel sheet may optionally further include by weight%, if necessary, at least one selected from the group consisting of 0.1% or less of Ti, 1.00% or less of Cu, 1.00% or less of Mo, 1.00% or less of Cr, 1.00% or less of Ni, 1.00% or less of V, 0.01% or less of Ca, 0.1% or less of Nb, 1% or less of Sn, 1% or less of W, 1% or less of Sb, 0.1% or less of Mg, 1% or less of Co, 1% or less of As, 1% or less of Zr, 1% or less of Bi, and 0.3% or less of REM.

Plating Layer

A member according to an embodiment of the present disclosure may include a plating layer formed on the base steel sheet, and the plating layer may include a first alloy layer, a second alloy layer, a third alloy layer, and a fourth alloy layer, sequentially formed from the base steel sheet.

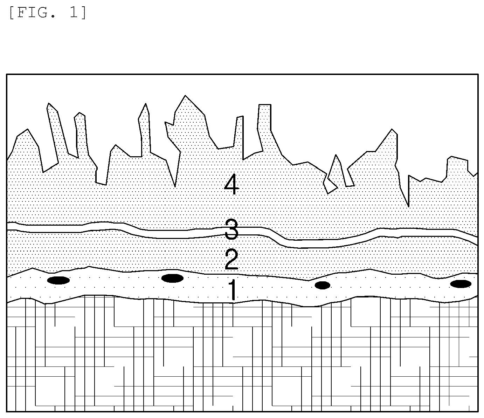

FIG. 1 is a schematic cross-sectional view of a plating layer of a member according to an embodiment of the present disclosure. As shown in FIG. 1, the plating layer of the present disclosure may be distinguished into four different layers according to diffusion gradients of components of the plating layer and Fe, Al, Si, and Zn components of the base steel sheet. In particular, the alloy layer may be distinguished by a weight of each alloy element when observing a cross-section of the plating layer in a backscatter electron (BSE) mode. In particular, in the case of the third alloy layer, an Si content is high, making it easy to distinguish colors according to a content of the alloy element from the second and fourth alloy layers.

According to an embodiment of the present disclosure, the plating layer may be divided into four alloy layers sequentially formed from the base steel sheet, and may include an $\alpha$-Fe layer formed on the base steel sheet; a first Fe-Al layer formed on the $\alpha$-Fe layer; an Al-Fe-Si layer formed on the first Fe-Al layer; and a second Fe-Al layer formed on the Fe-Al-Si layer.

According to an embodiment of the present disclosure, the $\alpha$-Fe layer, a first alloy layer, may include, by weight %, 5.0 to 18.0% of Al, 1.0 to 10.0% of Si, 75.0 to 90.0% of Fe, and 2.0% or less of Zn. The first Fe-Al layer, a second alloy layer, may include, by weight %, 25.0 to 48.0% Al, 1.0 to 7.0% of Si, 36.0 to 53.0% of Fe, and 6.0 to 20.0% of Zn. The Al-Fe-Si layer, a third alloy layer, may include, by weight %, 18.0 to 43.0% of Al, 8.0 to 15.0% of Si, 47.0 to 68.0% of Fe, and 2.0% or less of Zn. According to an embodiment of the present disclosure, the second Fe-Al layer, a fourth alloy layer, may include, by weight%, 6.0% or less of 0, 36.0 to 73.0% of Al, 10.0% or less of Si, 42.0% or less of Fe, and 12.0 to 40.0% of Zn.

Fourth alloy layer

The fourth alloy layer may have an R value of 1200 to 4500 as defined in the following Relational Expression 1.

$$[\text{Relational Expression 1}]$$

$$R = [Rpc] * [Zn]$$

In Relational Expression 1 above, [Rpc] is surface roughness indicating the number of peaks per 10 mm, and [Zn] is a weight % of an element.

Since an effect of a member on conversion treatment is determined by the fourth alloy layer (the second Fe-Al layer), which is an outermost layer, a component and surface roughness of the layer may be controlled in the present disclosure. In the present disclosure, the component of the layer was confirmed through cross-sectional SEM analysis, and the surface roughness (Rpc, the number of peaks per 10 mm) was measured based on ISO 4287:1997.

A product of surface roughness and a Zn content is mainly determined by the components of the plating layer, and in the present disclosure, a product thereof is limited. When an R value defined in Relational Expression 1 above is less than 1200, there may be a problem in that the Zn content is low, resulting in poor phosphate treatment properties, or that the number of peaks is low, resulting in poor painting adhesion. According to an embodiment of the present disclosure, the R value may be 1500 or more. On the other hand, when the R value exceeds 4500, the Zn content of the overall plating layer increases, which may cause an liquid metal embrittlement (LME) phenomenon during welding or the number of peaks in the roughness may increase, which may deteriorate equipment such as a mold, an annealing furnace, or the like, due to friction and wear. In addition, there is a risk of cracks occurring when manufacturing a member through hot press forming. According to an embodiment of the present disclosure, the R value may be 4100 or less.

Meanwhile, the surface roughness (Rpc) of a component manufactured through hot forming may be greatly affected by the component of the plating layer, regardless of the surface roughness before hot forming. If the roughness is high, since a friction coefficient at high temperatures increases, which can deteriorate equipment such as a mold, an annealing furnace, or the like, due to friction and wear, the surface roughness (Rpc) may be 130.0 or less according to an embodiment of the present disclosure. According to an embodiment of the present disclosure, the surface roughness (Rpc) may be 120.0 or less. In addition, unlike cold forming, since forming and processing are performed through contact between metals or oxides without lubricant, a certain level of friction is required, and thus, in the present disclosure, the surface roughness may be 80.0 or more.

In addition, in order to secure the desired conversion treatment properties in the present disclosure, a Zn content of the fourth alloy layer may be 12.0% or more. In an embodiment of the present disclosure, the Zn content may be 14.0% or more. According to an embodiment of the present disclosure, the Zn content may be 40.0% or less. According to an embodiment of the present disclosure, the Zn content may be 38% or less.

A member according to an embodiment of the present disclosure may have excellent conversion treatment properties, with a coverage rate of 50% or more after conversion treatment.

Hereinafter, a method for manufacturing a member of the present disclosure is described in detail.

A member according to an embodiment of the present disclosure may be manufactured by preparing a base steel sheet satisfying an alloy composition of the present disclosure, plating, skin pass milling, heating, and hot press forming.

Preparation of a base steel sheet

A base steel sheet satisfying an alloy composition thereof according to an embodiment of the present disclosure may be prepared. The base steel sheet according to an embodiment of the present disclosure is not particularly limited in its alloy composition, but it is more preferable to satisfy a composition thereof proposed in the present disclosure. The composition of the base steel sheet may be applied in the same manner as described above.

Plating

The base steel sheet may be plated by immersing the same in a plating bath including by weight%, 26.0 to 30.0% of Zn, 6.0 to 9.0% of Si, with a remainder of Al and inevitable impurities.

In the present disclosure, in order to control surface roughness and a Zn content of the plating layer, a composition of the plating bath may be controlled during plating.

In the plating layer, Zn may form an Al-Zn phase to secure sacrificial corrosion resistance. In addition, the surface roughness after hot forming may be greatly affected by the components of the plating layer regardless of the surface roughness before hot forming. As a heat treatment time increases due to an increase in the Zn content, the roughness tends to increase. Since a thermal expansion coefficient ($\times 10^{-6}$m/(m $\cdot$ °C)) value (30 to 35) of Zn is higher than that of Al (21 to 24), when the same amount of heat is added to the plating layer, a displacement increases as a Zn content is increased, so it can be estimated that this will lead to an increase in roughness. In order to secure such an effect, a Zn content of a plating bath in the present disclosure may be 26.0 to 30.0%. If the Zn content of the plating bath is less than 26.0%, the Zn content in the fourth alloy layer will not reach the desired level, and as a result, there is a concern that the sacrificial corrosion resistance may be reduced. According to an embodiment of the present disclosure, the Zn content may be limited to 26.5% or more. On the other hand, if the Zn content of the plating bath exceeds 30.0%, there is a concern that the Zn content range of the plating layer may be exceeded, and as a result, there may be a problem that microcracks occur due to LME. In addition, there is a concern that cracks may occur during hot press forming. In an embodiment of the present disclosure, the Zn content may be 29.5% or less.

In addition, during manufacturing, a Si content of a plating bath may be limited to 6.0 to 9.0% to suppress the diffusion of Al into the base steel sheet. The Si content of the plating bath affects a Si solid solution phase, and may have a small weight % value compared to the Si content of the target plating layer. If the Si content is less than 6.0%, a temperature of molten metal is high, so a thickness of $FeAl_3$ and $Fe_2Al_5$ intermetallic compounds becomes excessively thick, which may cause the material to break easily. According to an embodiment of the present disclosure, the Si content may be limited to 6.5% or more. On the other hand, if the Si content exceeds 9.0%, an effect of reducing the thickness of the intermetallic compound due to addition is reduced, and there may be a problem in that Si precipitates. In an embodiment of the present disclosure, Si may be included in an amount of 8.5% or less.

According to an embodiment of the present disclosure, a temperature of the plating bath may be in the range of 580 to 680°C.

Meanwhile, according to an embodiment of the present disclosure, before the plating operation, an operation of annealing the base steel sheet may be further included. In an embodiment of the present disclosure, an annealing operation in which the base steel sheet is heated to a temperature within a range of 600 to 950°C in a gas atmosphere containing 70% or more of $H_2$ and a remainder of $N_2$ at a dew point temperature of 5 to 20°C and maintained for 100 to 500 seconds, may be additionally performed.

Skin Pass Milling

The plated steel sheet may be subjected to skin pass milling (SPM).

In the present process, rolling may be performed with a constant elongation load or pressure reduction to improve press formability of the steel sheet, thereby imparting roughness and removing surface defects.

In the present disclosure, a rolling force of 200 to 900 tons may be applied during rolling. When the rolling force is less than 200 tons, defects such as flow patterns and scratches may be observed on the surface. On the other hand, when the rolling force is applied to 900 tons or more, wear of a roll may be severe, which may affect the reduction in productivity of the steel sheet, and elongation of the steel sheet may be improved by 1% or more, which may affect a material of a final product.

Normally, a transfer rate of the plated steel sheet (Ra sheet/Ra roll) may be calculated as A*HRB (roll hardness) + B*reduction ratio, and is around 30 to 70%. Here, A and B are constants, and may be determined according to a roll material, diameter, and equipment size. In this case, roughness (Ra) of a rolling roll may be 1.5 to 3.0 $\mu$m. If the roughness of the rolling roll is less than 1.5 $\mu$m, the surface may be smooth and workability may be reduced. On the other hand, if the roughness exceeds 3.0 $\mu$m, a stress may be concentrated on a high peak of a roll's micro unevenness, causing rapid wear and shortening of a durability life.

Heating and maintenance

The skin pass milled steel sheet may be heated to a temperature within a range of Ac3 to 950°C and maintained for 1 to 1000 seconds. Before performing the heating operation, an operation of processing the steel sheet into an appropriate size and shape may first be performed. When heated, if the temperature is lower than an Ac3 temperature, there may be a problem that it may be difficult for a material to completely be transformed into a single austenite phase, and if the temperature exceeds 950°C, there may be a problem in that the surface oxidizes or a hydrogen content in steel increases. When maintained after heating, it is preferable to shorten a maintenance time as much as possible to reduce carbon emissions and secure mechanical properties, and when the maintenance time is excessive, an upper limit of the maintenance time may be limited to 1000 seconds to reduce carbon emissions and suppress excessive Fe diffusion within the plating layer.

Before performing the heating operation, an operation of processing the steel sheet into an appropriate size and shape may be performed first.

When heated, if the temperature is lower than an Ar3 temperature, there may be a problem in that it is difficult for a material to completely be transformed into a single austenite phase, and if the temperature exceeds 950°C, there may be a problem in that the surface oxidizes or a hydrogen content in steel increases.

When maintained after heating, it is preferable to shorten a maintenance time as much as possible to reduce carbon emissions and secure mechanical properties, and when the maintenance time is excessive, an upper limit of the maintenance time may be limited to 1000 seconds to reduce carbon emissions and suppress excessive Fe diffusion within the plating layer.

Ac3 = -230.5[C]+31.6[Si]-20.4[Mn]-39.8[Cu]-18.1[Ni]- 14.8[Cr]+16.8[Mo]+912         [Expression]

in Expression above, [C], [Si], [Mn], [Cu], [Ni], [Cr], and [Mo] are a weight % of each element.

Hot press forming

The heated and maintained steel sheet may be subjected to hot press forming.

In the present disclosure, hot forming may be performed on a heated steel sheet to manufacture the heated steel sheet into a desired shape. In the present disclosure, hot press forming may be performed using a mold, and conditions of the present process are not particularly limited. The conditions may be applied under hot press forming conditions commonly used in the same technical field.

Mode for Invention

Hereinafter, the present disclosure will be specifically described through the following Examples. However, it should be noted that the following Examples are only for describing the present disclosure in detail by illustration, and are not intended to limit the scope of rights of the present disclosure.

(Example)

A base steel sheet including by weight%, 0.22% of C, 0.28% of Si, 0.036% of Al, 1.2% of Mn, 0.009% of P, 0.0006% of S, 0.0039% of N, 0.0031% of B, 0.03% of Ti, 0.21% of Cr, with a remainder of Fe was prepared, and then plated and subjected to skin pass milling under the conditions shown in Table 1 below, to manufacture a plated steel sheet. Thereafter, the manufactured plated steel sheet was cut to a size of 380x400mm$^2$, and then heated and hot press formed to manufacture a member. During plating, plating was performed using a composition of the plating bath in Table 1, and the composition of the plating bath further includes inevitable impurities in addition to the disclosed Zn, Si, and Al.

[Table 1]

| Specimen Nos. | Plating | | | | | Skin pass milling | Heating and maintenance | |
| | Plating bath | | | | | | | |
| | Composition (weight %) | | | Temperature (°C) | Adhesion amount (g/m$^2$) | Rolling force (ton) | Temperature(°C) | Time (min.) |
| | Zn | Si | Al | | | | | |
| 1 | 0 | 8.0 | 92.00 | 667 | 65 | 100 | 900 | 3 |
| 2 | 0 | 8.1 | 91.90 | 662 | 65 | 111 | 900 | 3 |
| 3 | 0 | 8.8 | 91.20 | 670 | 63 | 300 | 900 | 3 |
| 4 | 0 | 8.5 | 91.50 | 667 | 67 | 400 | 900 | 3 |
| 5 | 0 | 9.0 | 91.00 | 666 | 63 | 510 | 900 | 5 |
| 6 | 0 | 8.3 | 91.70 | 662 | 66 | 901 | 900 | 5 |
| 7 | 0 | 8.5 | 91.50 | 663 | 66 | 201 | 900 | 5 |
| 8 | 0 | 8.9 | 91.10 | 669 | 64 | 300 | 900 | 5 |
| 9 | 99.77 | 0 | 0.23 | 463 | 62 | 501 | 900 | 3 |
| 10 | 99.77 | 0 | 0.23 | 460 | 63 | 499 | 900 | 5 |
| 11 | 38.40 | 6.1 | 50.90 | 662 | 50 | 502 | 900 | 5 |
| 12 | 4.90 | 8.1 | 87.00 | 671 | 61 | 398 | 900 | 3 |
| 13 | 26.50 | 6.3 | 66.30 | 631 | 57 | 399 | 900 | 3 |
| 14 | 27.80 | 7.0 | 64.20 | 635 | 45 | 401 | 900 | 3 |
| 15 | 28.70 | 7.1 | 63.00 | 635 | 49 | 401 | 900 | 3 |
| 16 | 29.80 | 8.6 | 60.50 | 634 | 49 | 501 | 900 | 5 |
| 17 | 26.10 | 7.3 | 66.60 | 638 | 46 | 499 | 900 | 5 |
| 18 | 27.30 | 8.2 | 64.50 | 631 | 53 | 399 | 900 | 5 |
| 19 | 28.10 | 7.9 | 64.00 | 635 | 52 | 501 | 900 | 5 |
| 20 | 26.20 | 8.9 | 64.90 | 644 | 54 | 401 | 900 | 5 |

Table 2 below showed characteristics and physical properties of a plating layer observed for the manufactured member.

First, a plating layer was observed using a scanning electron microscope (SEM). Specifically, a cross-section of the hot-formed sample could be mounted to observe each layer in a backscattered electron (BSE) mode at a magnification of x2000, and a central point of each phase was measured three times at different positions using energy dispersive X-ray spectroscopy (EDS), and a composition of the plating layer was represented using an average value of the three points.

In addition, since an effect on conversion treatment is determined in the fourth alloy layer (the second Fe-Al layer), which is an outermost layer, the components of the layer were confirmed through cross-sectional SEM analysis, and the surface roughness (Rpc, the number of peaks per 10 mm) was measured based on ISO 4287:1997.

In addition, the manufactured specimens were subjected to conversion treatment in the following order: degreasing - washing 1 - surface adjustment - phosphate treatment - washing 2. The conversion-treated specimens were observed with a scanning electron microscope at a magnification of 150x, and a phosphate coverage area was calculated using Image Analyzer software, which is shown in Table 3 below. The specific conversion treatment conditions were performed as follows: a phosphate coverage of 50% or more was indicated as O, and a phosphate coverage of less than 50% was indicated as X.

∘ Conversion treatment

- Degreasing: FC-4460A 20 g/L, FC-4460B 12 g/L (Daehan Parkarizing Co., Ltd.), treatment time 90 seconds, temperature 60°C
- Washing 1: Treatment time 10 seconds, room temperature
- Surface adjustment: PL-Z 5 g/L (Daehan Parkarizing Co., Ltd.), concentration pH 7.5~11, treatment time 21 seconds, room temperature
- Phosphate treatment: PB-3111 28.2 g/L, NT-4055 5.8 g/L (Daehan Parkarizing Co., Ltd.), FA (free acidity)/TA (total acidity) 1.1 to 1.5/11.1 to 11.8 respectively, treatment time 120 seconds, phosphate treatment solution temperature 40 to 45°C
- Washing 2: Treatment time 10 seconds, room temperature

[Table 2]

| Spec imen Nos. | Plating layer | | | | | | | | | | | | | Divisi on |
| | First alloy layer (weight%) | | | | Second alloy layer (weight%) | | | | Third alloy layer (weight%) | | | | | |
| | Al | Si | Fe | Zn | Al | Si | Fe | Zn | O | Al | Si | Fe | Zn | |
| 1 | 10.6 | 3.1 | 86.3 | - | 50.7 | 2.0 | 47.3 | - | - | 32.2 | 9.4 | 58.4 | - | Compar ative Exampl e 1 |
| 2 | 16.2 | 2.9 | 80.9 | - | 47.2 | 3.8 | 49.0 | - | - | 32.4 | 9.3 | 58.3 | - | Compar ative Exampl e 2 |
| 3 | 9.9 | 4.3 | 85.8 | - | 48.0 | 4.9 | 47.1 | - | - | 28.5 | 10.2 | 61.3 | - | Compar ative Exampl e 3 |
| 4 | 16.3 | 4.2 | 79.5 | - | 47.1 | 4.0 | 48.9 | - | - | 30.0 | 9.1 | 60.9 | - | Compar ative Exampl e 4 |
| 5 | 11.0 | 3.8 | 85.2 | - | 46.3 | 4.7 | 49.0 | - | - | 28.3 | 10.5 | 61.2 | - | Compar ative Exampl e 5 |
| 6 | 17.1 | 3.7 | 79.2 | - | 47.1 | 4.7 | 48.2 | - | - | 33.9 | 10.1 | 56.0 | - | Compar ative Exampl e 6 |
| 7 | 12.8 | 4.9 | 82.3 | - | 46.3 | 4.6 | 49.1 | - | - | 27.2 | 9.2 | 63.6 | - | Compar ative Exampl e 7 |
| 8 | 7.0 | 3.2 | 89.8 | - | 47.9 | 3.1 | 49.0 | - | - | 34.4 | 10.2 | 55.4 | - | Compar ative Exampl e 8 |
| 9 | Single layer of Zn(37~78wt%), Fe(22~63wt%) | | | | | | | | | | | | | Compar ative Exampl e 9 |
| 10 | Single layer of Zn(32~73wt%), Fe(27~68wt%) | | | | | | | | | | | | | Compar ative Exampl e 10 |
| 11 | 8.8 | 6.4 | 78.4 | | 34.4 | 2.6 | 40.2 | 22.8 | | 34.1 | 12.2 | 53.0 | - | Comparative Exampl e 11 |
| 12 | 9.8 | 5.1 | 85.1 | | 45.1 | 3.0 | 49.8 | 2.1 | | 31.8 | 9.7 | 58.5 | | Compar ative Exampl e 12 |
| 13 | 12.2 | 9.2 | 78.6 | - | 28.3 | 6.0 | 50.3 | 15.4 | - | 19.8 | 13.6 | 66.6 | - | Invent ive Exampl e 1 |

(continued)

| Specimen Nos. | Plating layer | | | | | | | | | | | | | Division |
|---|---|---|---|---|---|---|---|---|---|---|---|---|---|---|
| | First alloy layer (weight%) | | | | Second alloy layer (weight%) | | | | Third alloy layer (weight%) | | | | | |
| | Al | Si | Fe | Zn | Al | Si | Fe | Zn | O | Al | Si | Fe | Zn | |
| 14 | 11.6 | 8.3 | 80.1 | - | 44.9 | 4.7 | 38.2 | 12.2 | - | 20.5 | 14.1 | 65.4 | - | Inventive Example 2 |
| 15 | 17.0 | 2.0 | 81.0 | - | 36.0 | 3.5 | 51.1 | 9.4 | - | 28.2 | 9.5 | 62.3 | - | Inventive Example 3 |
| 16 | 7.9 | 3.3 | 88.8 | - | 40.0 | 2.1 | 39.4 | 18.5 | - | 25.5 | 9.5 | 65.0 | - | Inventive Example 4 |
| 17 | 5.9 | 8.2 | 85.9 | - | 32.4 | 2.1 | 50.8 | 14.7 | - | 27.7 | 11.2 | 61.1 | - | Inventive Example 5 |
| 18 | 14.0 | 5.7 | 80.3 | - | 37.6 | 2.4 | 42.1 | 17.9 | - | 27.8 | 11.1 | 61.1 | - | Inventive Example 6 |
| 19 | 16.7 | 1.7 | 81.6 | - | 46.2 | 4.9 | 41.6 | 7.3 | - | 41.3 | 8.9 | 49.8 | - | Inventive Example 7 |
| 20 | 10.9 | 9.2 | 79.9 | - | 39.9 | 5.2 | 39.3 | 15.6 | - | 24.7 | 13.3 | 62.0 | - | Inventive Example 8 |

[Table 3]

| Specimen Nos. | Plating layer | | | | | Rpc (/10mm) | Relational Expression 1 | Physical properties | Division |
|---|---|---|---|---|---|---|---|---|---|
| | Fourth alloy layer (weight %) | | | | | | | Conversion treatment properties | |
| | O | Al | Si | Fe | Zn | | | | |
| 1 | - | 47.3 | 2.5 | 50.2 | - | 83.7 | - | X | Comparative Example 1 |
| 2 | - | 31.0 | 11.5 | 57.5 | - | 86.6 | - | X | Comparative Example 2 |
| 3 | - | 48.2 | 2.7 | 49.1 | - | 77.2 | - | X | Comparative Example 3 |
| 4 | - | 48.2 | 2.9 | 48.9 | - | 74.7 | - | X | Comparative Example 4 |
| 5 | - | 47.3 | 3.0 | 49.7 | - | 77.2 | - | X | Comparative Example 5 |
| 6 | - | 48.4 | 2.0 | 49.6 | - | 98.1 | - | X | Comparative Example 6 |
| 7 | - | 30.6 | 10.9 | 58.6 | - | 95.9 | - | X | Comparative Example 7 |
| 8 | - | 32.0 | 11.0 | 57.0 | - | 88.5 | - | X | Comparative Example 8 |
| 9 | 16.3 | - | - | 22.6 | 61.1 | 123.9 | 7570 | X (crack occurs) | Comparative Example 9 |
| 10 | 20.0 | - | - | 27.0 | 53.4 | 128.3 | 6616 | X (crack occurs) | Comparative Example 10 |
| 11 | - | 26.6 | 3.8 | 42.5 | 27.1 | 112.3 | 3043 | O (crack occurs) | Comparative Example 11 |

(continued)

| Spec imen Nos. | Plating layer | | | | | Rpc (/10mm) | Relational Expression 1 | Physical properties | Divisio n |
|---|---|---|---|---|---|---|---|---|---|
| | Fourth alloy layer (weight %) | | | | | | | Conversion treatment properties | |
| | O | Al | Si | Fe | Zn | | | | |
| 12 | - | 33.1 | 5.4 | 56.2 | 5.3 | 92.1 | 488 | X | Compara tive Example 12 |
| 13 | 3.7 | 70.9 | 0.9 | - | 24.6 | 102.4 | 2519 | O | Inventi ve Example 1 |
| 14 | 3.1 | 59.0 | 7.8 | 2.6 | 27.5 | 109.0 | 2998 | O | Inventi ve Example 2 |
| 15 | 5.1 | 56.9 | 2.4 | 6.5 | 28.8 | 117.4 | 3381 | O | Inventi ve Example 3 |
| 16 | 2.6 | 52.0 | 8.1 | - | 37.3 | 109.6 | 4088 | O | Inventi ve Example 4 |
| 17 | - | 39.9 | 4.7 | 38.1 | 17.4 | 118.2 | 2057 | O | Inventi ve Example 5 |
| 18 | - | 40.1 | 3.8 | 38.7 | 17.5 | 114.9 | 2011 | O | Inventi ve Example 6 |
| 19 | - | 41.3 | 4.3 | 39.6 | 14.8 | 119.8 | 1773 | O | Inventi ve Example 7 |
| 20 | 3.9 | 39.9 | 4.6 | 36.9 | 14.7 | 113.9 | 1674 | O | Inventi ve Example 8 |

As shown in Tables 2 and 3, in the case of Inventive Examples satisfying the conditions of the present disclosure, the characteristics proposed in the present disclosure could be satisfied, and the physical properties targeted by the present disclosure could be also secured.

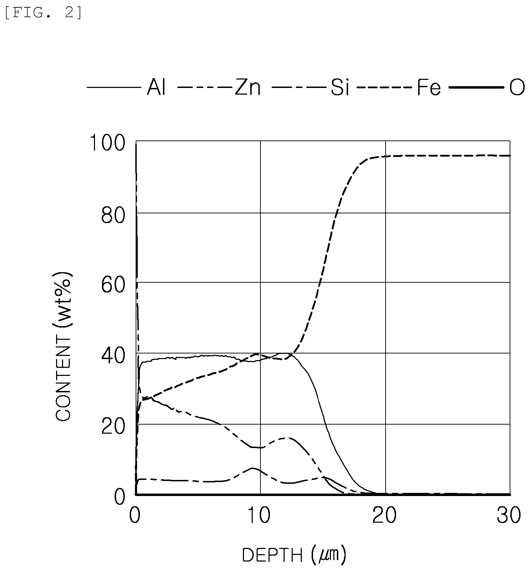

FIG. 2 is a photograph of Inventive Example 1 according to an embodiment of the present disclosure, measured using a glow discharge optical emission spectrometer (GDS) analysis method. As shown in FIG. 1, a content of an alloy element according to depth could be confirmed in a thickness direction from a surface of the plating layer to a base steel sheet.

On the other hand, Comparative Examples 1 to 10 and 12 are cases in which a composition of a plating bath or manufacturing conditions proposed in the present disclosure are outside of the range, and it could be confirmed that a plating layer could not be manufactured, and the physical properties were also inferior. Meanwhile, Comparative Examples 9 to 11 had inferior product properties due to cracks occurring during hot forming.

While example embodiments have been illustrated and described above, it will be apparent to those skilled in the art that modifications and variations could be made without departing from the scope of the present disclosure as defined by the appended claims.

## Claims

1. A member, comprising:

a base steel sheet; and
a plating layer formed on the base steel sheet,
wherein the plating layer comprises a first alloy layer, a second alloy layer, a third alloy layer, and a fourth alloy layer, sequentially formed from the base steel sheet,
wherein the fourth alloy layer has an R value of 1200 to 4500 as defined in the following Relational Expression 1,

$$R = [Rpc] * [Zn]$$

in Expression above, [Rpc] is surface roughness indicating the number of peaks per 10 mm, and [Zn] is a weight % of an element.

2. The member of claim 1, wherein the base steel sheet comprises by weight%, 0.02 to 0.6% of C, 0.001 to 2% of Si, 0.001 to 1% of Al, 0.1 to 4% of Mn, 0.05% or less of P, 0.02% or less of S, 0.02% or less of N, 0.0001 to 0.01% of B, with a remainder of Fe and inevitable impurities.

3. The member of claim 2, wherein the base steel sheet further comprises by weight%, at least one selected from the group consisting of 0.1% or less of Ti, 1.00% or less of Cu, 1.00% or less of Mo, 1.00% or less of Cr, 1.00% or less of Ni, 1.00% or less of V, 0.01% or less of Ca, 0.1% or less of Nb, 1% or less of Sn, 1% or less of W, 1% or less of Sb, 0.1% or less of Mg, 1% or less of Co, 1% or less of As, 1% or less of Zr, 1% or less of Bi, and 0.3% or less of REM.

4. The member of claim 1, wherein a Zn content of the fourth alloy layer is in the range of 12.0 to 40.0%, by weight%.

5. The member of claim 1, wherein an Rpc of the fourth alloy layer is in the range of 80.0 to 130.0.

6. The member of claim 1, wherein the first alloy layer comprises, by weight%, 5.0 to 18.0% of Al, 1.0 to 10.0% of Si, 75.0 to 90.0% of Fe, and 2.0% or less of Zn,

the second alloy layer comprises, by weight%, 25.0 to 48.0% of Al, 1.0 to 7.0% of Si, 36.0 to 53.0% of Fe, and 6.0 to 20.0% of Zn,
the third alloy layer comprises, by weight%, 18.0 to 43.0% of Al, 8.0 to 15.0% of Si, 47.0 to 68.0% of Fe, and 2.0% or less of Zn, and
the fourth alloy layer comprises, by weight%, 6.0% or less of O, 36.0 to 73.0% of Al, 10.0% or less of Si, 42.0% or less of Fe, and 12.0 to 40.0% of Zn.

7. The member of claim 1, wherein the member has a coverage rate of 50% or more after conversion treatment.

8. A method for manufacturing a member, comprising:

preparing a base steel sheet;
plating by immersing the base steel sheet in a plating bath comprising, by weight %, 26.0 to 30.0% of Zn, 6.0 to 9.0% of Si, with a remainder of Al and inevitable impurities;
skin pass milling the plated steel sheet;
heating the skin pass-milled steel sheet to a temperature within a range of Ac3 to 950°C and maintaining the same for 1 to 1000 seconds; and
hot press forming the heated and maintained steel sheet.

9. The method for manufacturing a member of claim 8, further comprising, before the plating operation, an annealing operation in which the base steel sheet is heated to a temperature within a range of 600 to 950°C in a gas atmosphere comprising 70% or more of $H_2$ and a remainder of $N_2$ at a dew point temperature of 5 to 20°C, and maintained for 100 to 500 seconds.

10. The method for manufacturing a member of claim 8, wherein a temperature of the plating bath is in the range of 580 to 680°C.

11. The method for manufacturing a member of claim 8, wherein the skin pass milling operation is performed with a rolling force of 200 to 900 tons.

[FIG. 1]

[FIG. 2]

## INTERNATIONAL SEARCH REPORT

| | International application No. |
| --- | --- |
| | **PCT/KR2023/020845** |

### A. CLASSIFICATION OF SUBJECT MATTER

**C23C 2/12**(2006.01)i; **C23C 2/26**(2006.01)i; **C23C 2/28**(2006.01)i; **C23C 2/02**(2006.01)i; **C22C 38/04**(2006.01)i; **C22C 38/02**(2006.01)i; **C22C 38/00**(2006.01)i; **C22C 38/32**(2006.01)i; **C22C 38/28**(2006.01)i

According to International Patent Classification (IPC) or to both national classification and IPC

### B. FIELDS SEARCHED

Minimum documentation searched (classification system followed by classification symbols)

C23C 2/12(2006.01); B21D 22/00(2006.01); B21D 22/02(2006.01); C21D 1/74(2006.01); C21D 9/00(2006.01); C22C 38/00(2006.01); C23C 2/04(2006.01); C23C 2/26(2006.01); C23C 2/28(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 도금(coating), 아연(zinc), 표면 거칠기(surface roughness), 압연(rolling), 열처리 (heat treatment), 합금층(alloyed layer)

### C. DOCUMENTS CONSIDERED TO BE RELEVANT

| Category* | Citation of document, with indication, where appropriate, of the relevant passages | Relevant to claim No. |
| --- | --- | --- |
| X | KR 10-2019-0078013 A (POSCO) 04 July 2019 (2019-07-04)<br>See paragraphs [0052], [0056], [0079], [0096], [0102], [0104]-[0120], [0139] and [0177], tables 2 and 5 and figure 4. | 8,10-11 |
| Y | | 1-7,9 |
| Y | KR 10-2022-0106776 A (BAOSHAN IRON & STEEL CO., LTD.) 29 July 2022 (2022-07-29)<br>See paragraphs [0016]-[0018], [0052]-[0056] and [0112] and table 2. | 1-7 |
| Y | KR 10-2015-0074882 A (POSCO) 02 July 2015 (2015-07-02)<br>See claims 6-8. | 9 |
| A | KR 10-2019-0130659 A (IRONOVATION MATERIALS TECHNOLOGY CO., LTD.) 22 November 2019 (2019-11-22)<br>See claims 1 and 7 and figure 2. | 1-11 |

☑ Further documents are listed in the continuation of Box C.　　☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **14 March 2024** | **14 March 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/020845** |

### C. DOCUMENTS CONSIDERED TO BE RELEVANT

| Category* | Citation of document, with indication, where appropriate, of the relevant passages | Relevant to claim No. |
| --- | --- | --- |
| A | JP 2010-018860 A (NIPPON STEEL CORP.) 28 January 2010 (2010-01-28)<br>See claims 1-4 and figure 1. | 1-11 |

**INTERNATIONAL SEARCH REPORT**
Information on patent family members

International application No.

**PCT/KR2023/020845**

| Patent document cited in search report | | | Publication date (day/month/year) | Patent family member(s) | | | Publication date (day/month/year) |
|---|---|---|---|---|---|---|---|
| KR | 10-2019-0078013 | A | 04 July 2019 | KR | 10-2010084 | B1 | 12 August 2019 |
| KR | 10-2022-0106776 | A | 29 July 2022 | AU | 2020-389982 | A1 | 30 June 2022 |
| | | | | BR | 112022009756 | A2 | 09 August 2022 |
| | | | | CA | 3159490 | A1 | 03 June 2021 |
| | | | | CN | 112877592 | A | 01 June 2021 |
| | | | | CN | 112877592 | B | 28 June 2022 |
| | | | | EP | 4067530 | A1 | 05 October 2022 |
| | | | | JP | 2023-503151 | A | 26 January 2023 |
| | | | | JP | 7326612 | B2 | 15 August 2023 |
| | | | | MX | 2022006471 | A | 09 September 2022 |
| | | | | TW | 202120697 | A | 01 June 2021 |
| | | | | TW | I780518 | B | 11 October 2022 |
| | | | | US | 2023-002843 | A1 | 05 January 2023 |
| | | | | WO | 2021-103805 | A1 | 03 June 2021 |
| | | | | ZA | 202205445 | B | 25 January 2023 |
| KR | 10-2015-0074882 | A | 02 July 2015 | KR | 10-1639843 | B1 | 14 July 2016 |
| KR | 10-2019-0130659 | A | 22 November 2019 | BR | 112020022079 | A2 | 02 February 2021 |
| | | | | CA | 3098614 | A1 | 31 October 2019 |
| | | | | CA | 3098614 | C | 14 March 2023 |
| | | | | CN | 108588612 | A | 28 September 2018 |
| | | | | CN | 108588612 | B | 20 September 2019 |
| | | | | CN | 112154224 | A | 29 December 2020 |
| | | | | CN | 112154224 | B | 16 June 2023 |
| | | | | CN | 114990463 | A | 02 September 2022 |
| | | | | CN | 114990463 | B | 03 October 2023 |
| | | | | CN | 116732516 | A | 12 September 2023 |
| | | | | EP | 3611288 | A1 | 19 February 2020 |
| | | | | EP | 3611288 | A4 | 16 December 2020 |
| | | | | EP | 3611288 | B1 | 01 November 2023 |
| | | | | EP | 3611288 | C0 | 01 November 2023 |
| | | | | EP | 4086365 | A1 | 09 November 2022 |
| | | | | EP | 4269645 | A2 | 01 November 2023 |
| | | | | EP | 4269645 | A3 | 22 November 2023 |
| | | | | JP | 2020-524211 | A | 13 August 2020 |
| | | | | JP | 2021-185264 | A | 09 December 2021 |
| | | | | JP | 6928972 | B2 | 01 September 2021 |
| | | | | JP | 7253837 | B2 | 07 April 2023 |
| | | | | KR | 10-2020-0129177 | A | 17 November 2020 |
| | | | | KR | 10-2021-0154885 | A | 21 December 2021 |
| | | | | KR | 10-2022-0077154 | A | 08 June 2022 |
| | | | | KR | 10-2178234 | B1 | 12 November 2020 |
| | | | | KR | 10-2416280 | B1 | 01 July 2022 |
| | | | | KR | 10-2543547 | B1 | 14 June 2023 |
| | | | | US | 11248276 | B2 | 15 February 2022 |
| | | | | US | 11578382 | B2 | 14 February 2023 |
| | | | | US | 11667988 | B2 | 06 June 2023 |
| | | | | US | 2020-0385836 | A1 | 10 December 2020 |
| | | | | US | 2022-0119911 | A1 | 21 April 2022 |
| | | | | US | 2022-0325370 | A1 | 13 October 2022 |
| | | | | WO | 2019-205698 | A1 | 31 October 2019 |

Form PCT/ISA/210 (patent family annex) (July 2022)

INTERNATIONAL SEARCH REPORT
Information on patent family members

International application No.

**PCT/KR2023/020845**

| Patent document cited in search report | | | Publication date (day/month/year) | Patent family member(s) | | | Publication date (day/month/year) |
|---|---|---|---|---|---|---|---|
| JP | 2010-018860 | A | 28 January 2010 | JP | 5444650 | B2 | 19 March 2014 |

Form PCT/ISA/210 (patent family annex) (July 2022)